## Europäisches Patentamt
## European Patent Office
## Office européen des brevets

(19)

(11) Numéro de publication: **0 148 690**
**B1**

(12)

# FASCICULE DE BREVET EUROPEEN

(45) Date de publication du fascicule du brevet:
**28.12.88**

(21) Numéro de dépôt: **84402656.7**

(22) Date de dépôt: **19.12.84**

(51) Int. Cl.⁴: **G 01 N 29/00, E 21 B 47/10**

(54) Dispositif de détection de particules, notamment des particules solides dans un fluide gazeux s'écoulant dans une conduite.

(30) Priorité: **27.12.83 FR 8320872**

(43) Date de publication de la demande:
**17.07.85 Bulletin 85/29**

(45) Mention de la délivrance du brevet:
**28.12.88 Bulletin 88/52**

(84) Etats contractants désignés:
**AT BE CH DE GB IT LI LU NL SE**

(56) Documents cités:
**FR-A- 2 316 594**
**FR-A- 2 412 840**

**Siemens Taschenbuch für Elektrotechnik, Karlsruhe, 4. Auflage, 1964, p. 226-229**

(73) Titulaire: **GAZ DE FRANCE, 23, rue Philibert Delorme, F-75017 Paris (FR)**

(72) Inventeur: **Chaumont, Claude, 132, Avenue J.B. Clément, F-93430 Villetaneuse (FR)**
Inventeur: **Waroux, Denis, 15, rue Roger Renard, F-95270 Saint Martin du Tertre (FR)**

(74) Mandataire: **Lerner, François, 5, rue Jules Lefèbvre, F-75009 Paris (FR)**

## Description

L'invention a pour objet un dispositif de détection de particules, notamment des particules solides, dans un fluide et en particulier dans du gaz naturel, s'écoulant dans une conduite selon le préambule de la revendication. Un tel dispositif a été décrit dans FR-A-2 412 840.

L'extraction du gaz naturel d'un réservoir souterrain, que ledit réservoir soit celui dans lequel le gaz s'est naturellement accumulé, ou bien un réservoir créé artificiellement, par exemple dans une formation aquifère de sable, et dans lequel le gaz est stocké momentanément, a toujours posé le problème de l'élimination des particules qui sont entraînées par le gaz et remontent à la surface en même temps que lui. Ces particules sont de différentes natures. On distingue par exemple des gouttelettes d'eau ou de boue et également du sable. L'eau et la boue ne sont généralement pas très gênantes, mais le sable est redoutable pour les installations, et notamment les vannes de détente, dont les organes de réglage du débit peuvent être détériorés en quelques minutes, si les remontées de sable dépassant un certain seuil. Normalement, le sable est arrêté à la partie inférieure de la colonne de remontée du puits d'extraction, grâce à une crépine qui est un filtre à espaces très étroits, mais il peut arriver que cette dernière se détériore pendant la période d'utilisation, ce qui se traduit par un entraînement du sable avec le gaz au point de perforation. Si un tel incident se produit, on doit pouvoir fermer le puits concerné aussi rapidement que possible pour protéger l'installation ou bien le faire fonctionner à un débit plus faible, inférieur au seuil qui correspond à la vitesse d'entraînement du sable. Cela suppose évidemment que chaque puits soit équipé d'un dispositif de détection de sable correspondant.

Des dispositifs de détection de particules ont déjà été proposés, et ont été par exemple décrits dans la demande de brevet français N° 2 316 594 déposée au nom du même demandeur. Dans ce brevet, on implante, sur la conduite de remontée du gaz, par exemple à l'endroit d'un coude, une sonde de détection comportant un barreau métallique, formant capteur de chocs, muni d'un transducteur, par exemple du type piézo-électrique, susceptible de convertir les ondes de choc des particules en signaux électriques exploitables par un circuit électronique de traitement. De façon à éliminer les signaux parasites existant dans la canalisation sur laquelle le barreau est fixé, on analyse dans une première chaîne de comptage les chocs sur le barreau capteur et les chocs et vibrations parasites auxquelles est soumise la canalisation, et dans une seconde chaîne parallèle, les chocs et vibrations parasites seules auxquelles est soumise la canalisation, et l'on fait une analyse comparative des signaux issus de ces deux chaînes, de façon à obtenir en sortie des signaux permettant de déterminer les chocs frappant la sonde. En outre, par un filtrage approprié des fréquences des chocs sujets de l'opération de comptage, il est possible de compter effectivement les chocs provenant des particules solides frappant le barreau, telles que des grains de sable. Il apparaît qu'avec un tel dispositif, il est possible de détecter l'arrivée de particules solides en tête d'un puits et même d'effectuer une mesure quantitative. Par contre le dispositif ne permet pas de déterminer l'endroit où nait le défaut. La conception de ce dispositif est en fait un dispositif fixe, à demeure, nécessitant en outre d'effectuer une mesure différentielle pour éliminer les vibrations parasites de la canalisation. En particulier ce dispositif n'est pas adapté à la réalisation d'un dispositif de mesure mobile qui autoriserait une mesure ponctuelle in situ, à tout niveau souhaitable dans le puits.

Un objet essentiel de l'invention est de prévoir un dispositif de détection de particules, notamment des particules solides dans un fluide, et en particulier dans du gaz naturel, s'écoulant dans une conduite, du type comportant un capteur de chocs, comportant une tête soumise au bombardement des particules, et que l'on peut déplacer dans le puits, au niveau des points à surveiller, ledit capteur étant muni d'un transducteur, par exemple du type piézo-électrique, susceptible de convertir les ondes de chocs de particules précitées en signaux électriques exploitables par un circuit électronique de traitement.

A cet effet, conformément à l'invention, ledit circuit électronique de traitement est entièrement embarqué dans le puits, en étant mécaniquement associé à ladite tête, son alimentation en courant constant se faisant à partir d'un câble électrique de liaison à un poste fixe, et les signaux électriques envoyés audit poste étant modulés en fréquence à partir dudit circuit électronique embarqué.

Selon une autre caractéristique de la construction, le dispositif se présente sous la forme d'une «canne» comportant, à son extrémité avant une tête de détection profilée, en matériau dur, tel qu'un acier spécial, en arrière de la tête un corps cylindrique logeant l'électronique embarquée et une extrémité supérieure d'étanchéité et de jonction au câble de diagraphie qui remplit les fonctions d'alimentation, de suspension et de retour du signal par superposition avec l'alimentation.

Selon une autre caractéristique encore de la construction, la tête de détection est montée dans l'axe de l'extrémité de canne avec prévision de joints d'étanchéité et d'isolation par rapport au corps de la canne, et elle porte par son extrémité arrière contre une pastille de céramique piézo-électrique, en contact avec une pièce de compression maintenue par un ressort, cette pièce formant électrode.

Avec la conception générale du dispositif telle que mentionnée, il est possible, malgré les conditions extrêmement sévères de travail de la canne dans la canalisation d'extraction du gaz, malgré les contraintes de volumes très étroits imposées à l'électronique embarquée, d'effectuer un comptage fiable et précis des chocs de particules contre la tête de détection, tout en s'affranchissant des chocs et des vibrations parasites auxquels est soumise la canalisation.

Selon une autre caractéristique, l'analyse des signaux émis au niveau du transducteur se fait à travers un filtre passe-haut permettant de différencier les fréquences élevées correspondant aux seuls chocs des particules solides de fréquences plus basses correspondant aux chocs de particules molles agissant sur la sonde.

Selon une autre caractéristique, l'alimentation en courant constant à partir du poste fixe comprend un organe de commande, permettant de modifier le seuil d'intensité du courant, afin de commander un relais de basculement du filtre passe-haut, par commande en inversion d'un bloc de commande. Grâce à cette disposition complémentaire, il est possible à partir du poste fixe, par exemple au sol, de commuter le filtrage des signaux de façon à compter les chocs dus par exemple à l'impact de particules solides telles que des grains de sable sur la canne et/ou les chocs dus à l'impact sur la canne de gouttes d'eau ou de boue. De cette façon, sans alourdissement ni complication notable de l'électronique embarquée, il est possible d'effectuer une analyse plus précise des chocs frappant le dispositif de détection.

L'invention et sa mise en œuvre apparaîtront plus clairement à l'aide de la description qui va suivre faite en référence aux dessins annexés dans lesquels:

la figure 1 montre de façon schématique en vue en coupe verticale une «canne» de détection conforme à l'invention descendue dans un puit d'extraction de gaz;

la figure 2 montre à plus grande échelle et de façon plus détaillée, en coupe verticale, les organes mécaniques essentiels de la canne;

la figure 3 est une vue synoptique d'un exemple de réalisation d'un appareillage électronique conforme à l'invention, la vue montrant le capteur piézo-électrique, l'électronique embarquée, le poste de commande et de contrôle fixe et le câble de liaison entre la canne et le poste fixe;

la figure 4 montre de façon plus détaillée et schématiquement un exemple de réalisation conforme à l'invention du dispositif de traitement électronique embarqué dans une canne en conformité avec le schéma synoptique de la figure précédente;

la figure 5 montre, comme la figure 2, une variante du montage mécanique du capteur piézo-électrique en bout de la canne.

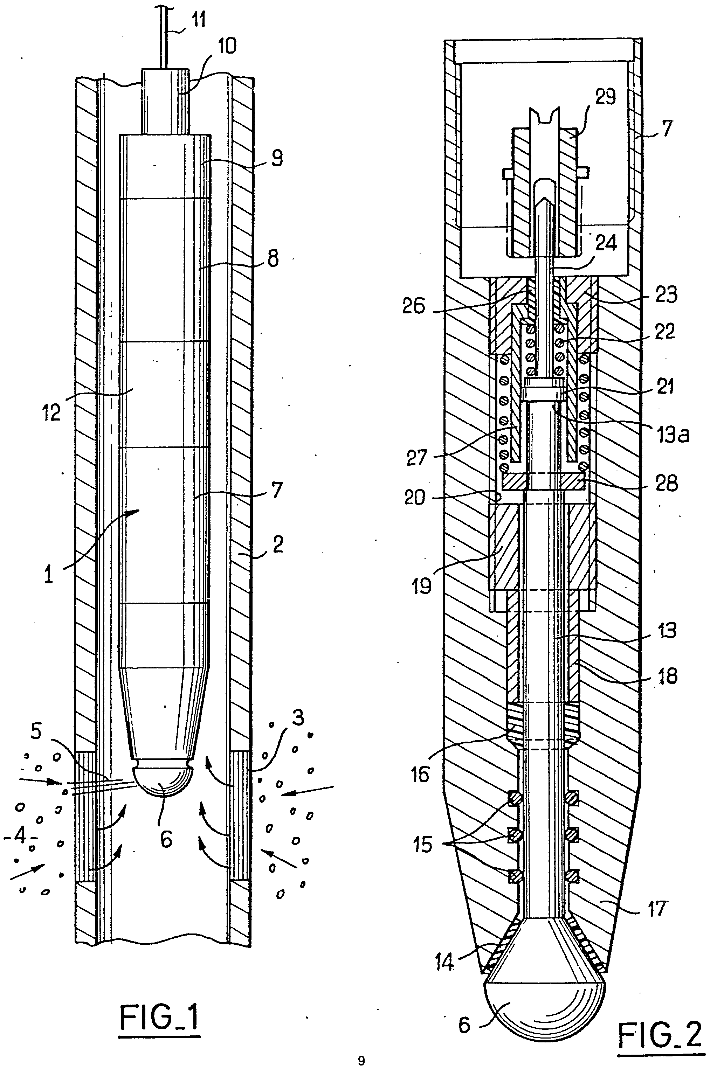

En faisant tout d'abord référence à la figure 1, on a repéré en 1 la canne de détection ou «canne à sable» descendue dans la canalisation 2 du puits sensiblement au niveau d'une crépine 3. Le gaz et l'eau venant de la roche magasin 4 sortant normalement par les orifices de la crépine 3. Si celle-ci est détériorée, des particules solides telles du sable viennent frapper en 5 la tête de détection profilée 6, par exemple en forme de demi-sphère.

Le dispositif de détection formant «canne à sable» comporte au dessus de la tête de détection 6, un corps cylindrique 7 permettant de loger l'électronique embarquée comme il sera décrit plus loint. Dans l'exemple illustré à la figure 1, la canne comporte vers son extrémité arrière (c'est-à-dire située au dessus dans la position illustrée à la figure 1) un lest ou une barre de charge 8, par exemple en plomb ou en uranium appauvri et se termine à son extrémité supérieure arrière par un organe d'étanchéité 9 solidaire d'une pièce d'attache 10 qui assurera la liaison avec le câble 11 de diagraphie assurant la suspension, l'alimentation électrique et la transmission des signaux depuis le fond du puits jusqu'en surface au poste fixe de commande. La canne peut en outre comporter, repéré en 12, un détecteur des joints des tubes vissés constituant le puits.

le montage de la tête de détection 6 en avant du corps cylindrique 7 apparaît plus clairement à la figure 2. La tête de détection 6 est constituée en un matériau dur résistant à l'abrasion tel qu'un acier spécial ayant une forme aérodynamique à tête hémisphérique. La boule de détection 6 formant l'extrémité avant de la canne exposée au flux de gaz. Elle se prolonge par une tige cylindrique 13 montée dans l'axe de la canne avec interposition de joints d'étanchéité et d'isolement tels que 14, 15 et 16 évitant le contact métal-métal entre la tête 6 et la tige 13, d'une part, et l'extrémité avant 17 du corps cylindrique extérieur de la canne, d'autre part.

Pour assurer une bonne étanchéité, le joint de compression 16 est comprimé par un manchon 18 lui-même poussé par une bague filetée 19 se vissant en 20 à l'intérieur de l'élément 17.

A l'extrémité supérieure 13a de la tête, traitée pour avoir un très bon état de surface, est placée une pastille de céramique piézo-électrique 21 mise en pression par un ressort 22 comprimé par une bague filetée 23 se vissant également sur le pas de vis 20 à l'intérieur de l'élément 17.

Une électrode cylindrique 24 appuie sur la céramique 21 par son extrémité surfacée, grâce au ressort 22 mis en compression par l'épaulement d'un fourreau isolant 26 muni d'un fourreau métallique mince 27 de guidage de la pastille 21. La bague 23 met également en compression le ressort 25 appuyant sur une rondelle 28 pour la mise à la masse de la tige 13. Enfin l'extrémité de l'électrode 24 est reliée électriquement à l'entrée de l'amplificateur 56 du système qui sera décrit ci-après, par une fiche femelle classique 29 de type UHF.

L'ambiance dans laquelle travaille la canne est sévère en pression (entre 120 et 200 bar), en contraintes mécaniques variées (chocs latéraux et axiaux et poussée dynamique du gaz). La tête de détection doit donc être d'une constitution très robuste. Le diamètre normalisé des instruments de diagraphie est de 43 mm, la longueur étant d'environ 1,50 m. Il est évidemment possible de réaliser cet instrument dans des longueurs et des diamètres différents et/ou de l'incorporer à un instrument multiple existant par une modification de l'extrémité inférieure. En raison des rétrécissements de diamètres rencontrés au niveau des crépines dans certains puits de soutirage, la poussée dynamique du gaz soutiré en fond de puits est importante et peut dépasser le poids de celle-ci. Son diamètre doit donc être aussi petit que possible, compatible cependant avec l'embarquement de l'électronique, et son poids doit être suffisamment élevé pour compenser largement l'effet de cette poussée. C'est pourquoi des modèles de cette canne à sable ont été réalisés avec des tubes d'acier spécial de 33,7 mm de diamètre, comportant des barres de charge 8 de même diamètre vissé en haut de la canne soit en plomb, soit mieux en uranium appauvri.

Dans les débits de soutirage importants (20 000 Nm³/h ou plus), le profil aérodynamique de la pointe joue un rôle important. C'est pourquoi la tête est effilée, terminée soit par une boule comme indiqué 6, soit avantageusement par un cône dont l'angle d'attaque ne dépasse pas 30° (voir figure 5).

Les signaux issus de la céramique piézo-électrique étant faibles et sous haute impédance, la chaîne d'amplification et de filtrage doit être constituée par des amplificaiteurs de haute qualité à faible niveau de bruit.

De façon à permettre de répondre à toutes les exigences, on a choisi selon l'invention de reporter l'alimentation électrique du dispositif à poste fixe au sol, et d'embarquer à bord de la canne toute l'électronique de détection en adoptant la procédure d'analyse et de transfert des signaux qui va être décrite maintenant.

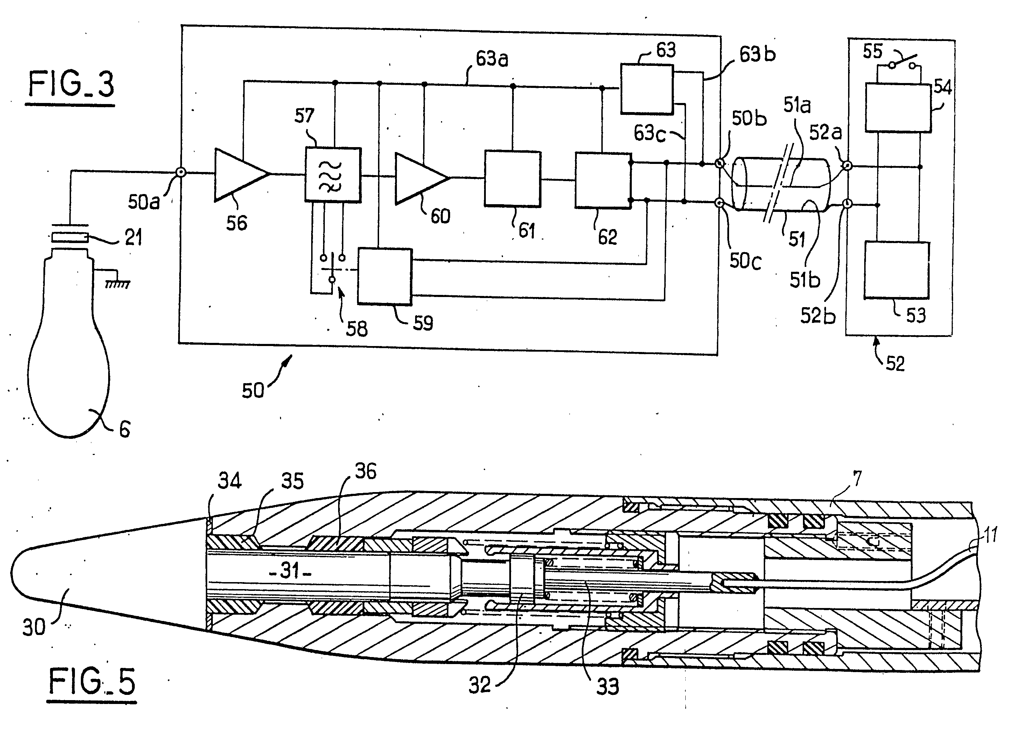

En faisant tout d'abord référence au schéma synoptique de la figure 3, l'élément piézo-électrique 21 est connecté à l'entrée 50a d'un dispositif de traitement électronique repéré dans son ensemble 50 embarqué dans la canne. Le dispositif 50 a deux bornes de sortie de signal 50b et 50c connectées l'une au fil central 51b l'autre à la gaine 51a, du câble de diagraphie 51 reliant la canne au poste de commande fixe, par exemple au sol 52. Les deux bornes 52a, 52b du poste 52 relient le fil central 51b et la gaine 51a à un bloc de réception et de traitement de signal 53 ainsi qu'à une alimentation de courant continu constant 54, à deux valeurs d'intensité sélectionnées par un organe de commande 55, tel qu'un interrupteur.

Le signal présent à l'entrée 50a du dispositif 50 traverse un amplificateur 56 et un filtre passe-haut 57 à deux fréquences de coupure sélectionnées en fonction de la position d'un relais inverseur 58 piloté par un bloc de commande 59, dont l'entrée est reliée aux bornes de sortie 50b, 50c du dispositif 50. Le signal de sortie du filtre 57 passe dans un amplificateur 60 puis dans un bloc de mise en forme 61 et enfin dans un dispositif d'injection 62 du signal dans le câble de diagraphie par l'intermédiaire des bornes de sorties 50b, 50c. Ces bornes sont aussi en liaison, par des fils 63b, 63c avec un bloc d'alimentation en tension stabilisée 63 distribuant les tensions de fonctionnement nécessaires à tous les composants 56 à 62 du dispositif 50 par un fil d'alimentation 63a et la masse.

Une particule incidente frappant l'organe de détection 6, en l'occurrence le barreau d'acier et son extrémité exposée au flux incident, une onde ultra-sonore se propage dans l'acier en se réfléchissant sur les parois de la tige 13 jusqu'à son extrémité supérieure 13a. A cet endroit, l'onde est transmise à la pastille de céramique piézo-électrique maintenue par la pièce de compression 24 formant électrode collectrice des charges électriques, la contre-électrode étant constituée par l'extrémité supérieure du barreau d'acier reliée à la masse de la canne comme il a été indiqué.

Les signaux issus de la céramique 21 sont amplifiés par l'amplificateur 56 à forte inpédance d'entrée, puis ils traversent l'ampli-filtre 57 passe-haut dont la fréquence de coupure est commutée soit à basse fréquence (30 kHz) permettant de compter les impacts des gouttes d'eau aussi bien que ceux des grains de sable, soit à haute fréquence (300 kHz) permettant de sélectionner les seuls impacts des particules solides. Le signal résultant est amplifié une nouvelle fois par l'ampli 60 puis transformé en créneaux rectangulaires par le circuit de mise en forme 61 (chaque créneau correspondant à un impact eau ou sable).

Enfin le signal ainsi numérisé est injecté par un circuit spécialisé 62 en modulation de fréquence sur le courant d'alimentation et est envoyé dans le câble de diagraphie 51. Il est reçu, séparé, amplifié et traité par l'appareillage de réception 53 se trouvant en surface dans l'unité de diagraphie.

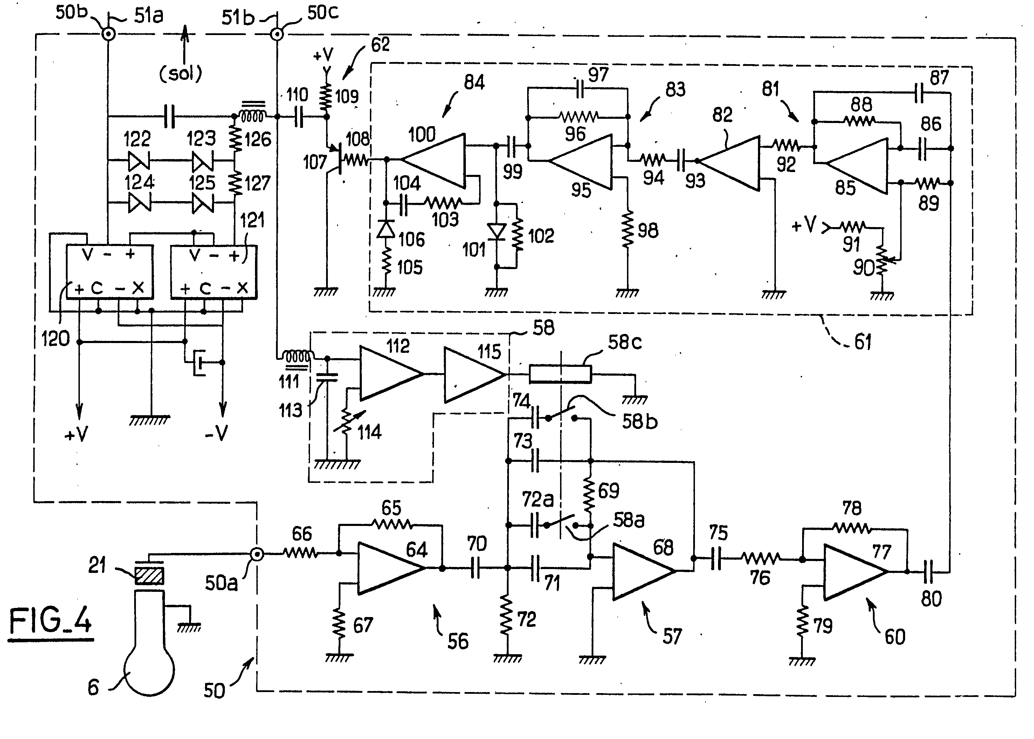

On fera maintenant référence à la figure 4 décrivant plus en détail une réalisation de l'électronique embarquée.

L'amplificateur 56 est formé de manière classique par un amplificateur différentiel 64 pourvu d'une résistance de contre-réaction 65 reliant sa sortie à sa première entrée reliée, par une résistance 66, à la borne d'entrée 50a du dispositif 50, tandis que sa seconde entrée est mise à la masse au travers d'une résistance 67.

Le filtre passe-haut 57 commandé par le relais 58 est formé autour d'un amplificateur différentiel 68 pourvu d'une boucle de contre-réaction comprenant une résistance 69 reliant la sortie à la première entrée de l'amplificateur 68, les deux condensateurs 70 et 71 reliant en série cette première entrée à la sortie de l'amplificateur 56, leur point intermédiaire étant mis à la masse par la résistance 72 et étant connecté à la première entrée de l'amplificateur 56 par un condensateur 72a monté en série avec un contact 58a du relais 58 et à la sortie de l'amplificateur 56 par un condensateur 73 monté en parallèle sur le montage série d'un condensateur 74 et d'un second contact 58b du relais 58.

La sortie du filtre 57 traverse un condensateur de liaison 75 et une résistance 76 pour aboutir à la première entrée d'un amplificateur différentiel 77 monté comme amplificateur 60, pourvu de sa résistance de contre-réaction 78 et de la résistance 79 de mise à la masse de la deuxième entrée. La sortie de l'amplificateur 60 attaque au travers du condensateur de liaison 80 le bloc de mise en forme 61. Celui-ci se compose d'un comparateur 81, d'un amplificateur 82, d'un intégrateur 83 et d'un amplificateur de sortie 84. Le comparateur 81 se compose d'un amplificateur différentiel 85 dont la première entrée est reliée, d'une part au condensateur 80 par le condensateur 86 dont les plaques communes sont reliées à sa sortie par le condensateur 87, et, d'autre part, à sa sortie par la résistance 88 et dont la seconde entrée communique par la résistance 89 aux plaques communes des condensateurs 80 et 86 et se branche à un potentiel variable déterminé par le potentiomètre 90 et la résistance 91 montés en série entre les tensions d'alimentation +V et la masse. La sortie de l'amplificateur 81 attaque par une résistance 92 la première entrée de l'amplificateur différentiel 82 ayant sa deuxième entrée mise à la masse et sa sortie attaquant au travers du condensateur 93 et de la résistance en série 94 la première entrée d'un amplificateur différentiel 95 constituant l'intégrateur 80. Celui-ci comprend dans sa boucle de réaction la résistance 96 et le condensateur 97 montés en parallèle, et la résistance 98 mettant à la masse la deuxième entrée de l'amplificateur différentiel 95. La sortie de celui-ci attaque l'amplificateur de sortie 84 à travers un condensateur 99, la première entrée d'un amplificateur différentiel 100, par ailleurs mise à la masse, via une diode 101, cathode à la masse, et shuntée par une résistance 102. Sa deuxième entrée est rebouclée sur sa sortie, via le montage série d'une résistance 103 et d'un condensateur 104. Sa sortie est mise à la masse via le montage série d'une résistance 105 et d'une diode 106, anode à la masse.

Le bloc d'injection 62 se compose d'un transistor 107, dont la base est reliée à la sortie de l'amplificateur de sortie 84 par une résistance 108, le collecteur est mis directement à la masse et l'émetteur est connecté à la tension d'alimentation +V via une résistance 109 et à la borne de sortie de signal 50c du dispositif 50 via le condensateur 110.

Le bloc de commande 58 est aussi relié à la borne 50c via une self-bouchon 111 qui attaque la première entrée d'un amplificateur différentiel 112 monté en comparateur, dont les première et deuxième entrées sont respectivement mises à la masse via le condensateur 113 et la résistance variable 114 et dont la sortie attaque un amplificateur de sortie 115 alimentant la bobine 58c de commande du relais 58.

Le rôle du relais 58 est de déterminer les fréquences que le filtre 57 doit prendre en compte, selon que l'on veut compter les grains de sable seuls (fréquence élevée) ou tous les chocs (eau, boue et sable mélangés: fréquence moyenne est élevée). Ainsi, si les contacts 58a et 58b sont ouverts comme illustré, le filtre ne laissera passer que les hautes fréquences, et ne sera donc sensible qu'aux chocs des particules dures.

Le signal issu du filtre 57 est amplifié en 60 et est comparé en 81 qui détermine le seuil minimal à prendre en compte, c'est-à-dire le front descendant de l'impulsion que l'intégrateur 83 est chargé de former. La diode 101 cadre l'amplitude de l'impulsion à une valeur déterminée par la valeur de la résistance 102, tandis que la diode 106 élimine les parties négatives du signal de sortie. Le créneau positif ainsi délivré par le bloc 61 attaque le transistor 107, qui va le transmettre au poste 52 via la sortie 50c et le fil 51b alimenté en courant constant.

D'un autre côté en agissant sur l'organe de commande 55 de l'alimentation 54 du poste 52, il est possible de changer l'intensité du courant constant, que le comparateur 112 détecte pour commander en conséquence le fonctionnement du relais 58.

En ce qui concerne l'alimentation de l'électronique embarquée, et l'injection du signal, on notera que l'alimentation de surface à courant constant ne peut dépasser 60 mA, sous une tension pouvant fluctuer en fonction des manœuvres et des longueurs de câbles déroulées par le treuil. Comme on désire obtenir des tensions stabilisées de +15 et de −15 volts (ou +12 et −12 volts) par rapport à la masse, avec des courants 50 mA, on a choisi de monter deux alimentations stabilisées ou convertisseurs continu-continu 120, 121 en série, en entrées pour bénéficier au mieux de la tension d'entrée et utiliser le courant disponible, les sorties de ces convertisseurs étant connectées en parallèle. Les convertisseurs 120, 121 sont protégés en entrée contre les surtensions dues à une éventuelle erreur de réglage de la source par deux étages de diodes Zener et résistances 122–125, 126, 127.

Pour la commande de déclenchement du relais 58, on note que la variation d'intensité du courant provoquée par l'ouverture ou la fermeture de l'interrupteur 55, provoquant une augmentation ou une diminution d'environ 10% de l'intensité du courant permet par augmentation ou diminution corrélative de la tension d'entrée de l'amplificateur différentiel formant comparateur à seuil 112 d'inverser l'état de sortie du comparateur et donc d'actionner le relais 58 pour ouvrir ou fermer les contacts 58a, 58b modifiant le niveau de filtrage haute-fréquence des impulsions comptées.

Dans la variante mécanique de construction illustrée à la figure 5, la tête de détection 6 de la figure 2 a été remplacée par une tête de détection 30 de forme conique à faible angle au sommet et pointe arrondie. Derrière la tête conique 30 se trouve la tige cylindrique 31 transmettant les vibrations à une cellule piézo-électrique 32 mise en compression entre cette tige et une électrode 33 recueillant les charges électriques créées pour les transmettre à l'entrée 50a du dispositif 50. Bien que le montage mécanique soit quelque peu différent, on constate que, de même que dans le mode de réalisation de la figure 2, l'organe de détection mécanique 30, 31 des impacts est isolé et monté de façon étanche à l'intérieur de la canne au moyen de joints d'étanchéité convenablement disposés et comprimés tels que 34, 35, 36.

## Revendications

1. Dispositif de détection de particules, notamment des particules solides, dans un fluide, et en particulier dans du gaz naturel, s'écoulant dans une conduite (2), du type comprenant un capteur de chocs comportant une tête (6, 30) soumise au bombardement des particules et que l'on peut déplacer dans la conduite au niveau des points à surveiller, ledit capteur étant muni d'un transducteur, par exemple du type piézo-électrique, susceptible de convertir des ondes de choc de particules précitées en signaux électriques exploitables par un circuit électronique de traitement (50), lequel est alimenté en courant constant à partir d'un moyen (54) d'alimentation et, par l'intermédiaire d'un câble électrique de liaison (51), relié à un poste fixe (52), les signaux électriques envoyés audit poste étant modulés en fréquence à partir dudit circuit électronique, ledit dispositif étant caractérisé en ce que le circuit électronique de traitement (50) précité est entièrement embarqué dans ladite conduite, en étant mécaniquement associé à ladite tête, (6, 30) et en ce qu'au moyen (54) d'alimentation en courant constant, à partir du poste fixe, est associé un organe de commande (55) permettant de modifier le seuil d'intensité du courant afin de piloter, par une commande en inversion d'un bloc de commande (59), un relais (58) de basculement d'un filtre passe-haut (57) comprenant plusieurs fréquences de coupure permettant de différencier les fréquences des sinaux émis par ledit transducteur.

2. Dispositif selon la revendication 1, caractérisé en ce qu'il comprend un circuit de mise en forme (61) comportant un comparateur (81) qui détermine le seuil à prendre en compte, un amplificateur (82), un intégrateur de sortie (83) formant l'impulsion à compter, et un amplificateur de sortie (84).

3. Dispositif selon la revendication 1 ou la revendication 2, caractérisé en ce que l'alimentation en courant constant à partir du poste fixe, comprend deux circuits de stabilisation embarqués (120, 121) dont les entrées sont connectées en série et les sorties en parallèle.

4. Dispositif selon l'une des revendications précédentes, caractérisé en ce qu'il se présente sous la forme d'une canne (1) comportant à son extrémité avant, une tête de détection profilée (6, 30) en matériau dur tel qu'un acier spécial, en arrière de la tête un corps cylindrique (7) logeant l'électronique embarquée, et une extrémité supérieure (9, 10) d'étanchéité et de jonction au câble de diagraphie (11) d'alimentation et de suspension.

5. Dispositif selon la revendication 4, caractérisé en ce que la tête de détection (6, 13; 30, 31) est montée en bout de canne, dans son axe, avec prévision de joints d'étanchéité et d'isolation (14, 15, 16; 34, 35, 36) par rapport au corps, et elle porte, à son extrémité arrière, contre une pastille de céramique piézo-électrique (21, 32) maintenue par une pièce de compression telle qu'un ressort et formant transducteur précité.

## Claims

1. Device for detecting particles, particularly solid particles, in a fluid and particularly in natural gas, flowing through a conduit (2) of a type comprising a shock sensor comprising a head (6, 30) subjected to bombardement by particles and which can be displaced within the conduit at the level of points which are to be monitored, the said sensor being provided with a transducer, for example of the piezo electric type, adapted to convert shock waves from the aforesaid particles into electrical signals which can be processed by an electronic processing circuit (50) which is supplied with constant current from a supply means (54) and, through the medium of an electrical connecting cable (51), linked to a fixed station (52), the electrical signals sent to the said station being frequency modulated with effect from the said electronic circuit, the said device being characterised in that the aforesaid electronic processing circuit (50) is entirely freely suspended within the said conduit, being mechanically associated with the said head (6, 30) and in that there is associated with the constant current supply means (54), from the fixed station, a control member (55) which makes it possible to modify the intensity threshold of the current in order, via a command to reverse a control unit (59), a switch-over relay (58) of a high-pass filter (57) comprising a plurality of switch-off frequencies making it possible to differentiate the frequencies of the signals emitted by the said transducer.

2. A device according to Claim 1, characterised in that it comprises a shaping circuit (61) incorporating a comparator (81) which determines the threshold to be taken into account, an amplifier (82), an output integrator (83) forming the pulse to be counted, and an output amplifier (84).

3. A device according to Claim 1 or 2, characterised in that the constant current supply from the fixed station comprises two stabilising circuits (120, 121), the inputs of which are connected in series while the outputs are connected in parallel.

4. A device according to one of the preceding Claims, characterised in that it takes the form of a cane (1) having at its front end a profiled detector head (6, 30) of a hard material such as a special steel with, behind the head, a cylindrical body (7) housing the electronic unit, and a sealing-tight upper junction end (9, 10) for connection to the supply and suspension diagraphy cable (11).

5. A device according to Claim 4, characterised in that the detector head (6, 13; 30, 31) is mounted at the end of the cane, in its axis, with sealing-tight packings and seals (14, 15, 16; 34, 35, 36) for insulation in respect of the body, the detector head bearing at its rear end against a piezo electric ceramic trip (21, 32) maintained by a compression member such as a spring and forming the aforesaid transducer.

## Patentansprüche

1. Einrichtung zum Feststellen von Partikeln, insbesondere von festen Partikeln, in einem Fluid, insbesondere in natürlichem Gas, das in einer Leitung (2) der Art fliesst, die einen Prallfühler aufweist, der einen dem Auftreffen von Partikeln ausgesetzten Kopf (6, 30) umfasst und den man in der Leitung auf das Niveau von Überwachungspunkten verlagern kann, wobei der Fühler mit einem Wandler, beispielsweise der piézo-elektrischen Bauart, versehen ist, der geeignet ist, Stosswellen der erwähnten Partikel in elektrische Signale umzuwandeln, die durch einen elektronischen Schaltkreis (50) nutzbar sind, der mit konstantem Strom aus einem Versorgungsmittel (54) versorgt wird und mittels eines elektrischen Verbindungskabels (51) mit einem stationären Gerät (52) verbunden ist, wobei die dem genannten Gerät zugeführten elektrischen Signale von dem genannten elektronischen Schaltkreis frequenzmoduliert sind, wobei die Einrichtung dadurch gekennzeichnet ist, dass der vorerwähnte elektronische Schaltkreis (50) vollständig in der genannten Leitung enthalten ist, indem er mit dem genannten Kopf (6, 30) mechanisch verbunden ist, und dass mit dem Mittel (54) zum Versorgen mit konstantem Strom, ausgehend von dem stationären Gerät, ein Steuerorgan (55) verbunden ist, das die Intensitätsschwelle des Stromes zu modifizieren erlaubt, um durch eine Inversionssteuerung eines Steuerblocks (59) ein Kipprelais (58) eines Hochpassfilters (57) zu steuern, der mehrere Durchlass- oder Grenzfrequenzen enthält, die es ermöglichen, die Frequenzen der von dem genannten Wandler abgegebenen Signale zu differenzieren.

2. Einrichtung nach Anspruch 1, dadurch gekennzeichnet, dass sie eine Formgeber-Schaltung (61) umfasst, die einen Komparator (81), der die zu berücksichtigende Schwelle bestimmt, einen Verstärker (82), einen Zählimpuls erzeugenden Ausgangsintegrator (83) und einen Ausgangsverstärker (84) aufweist.

3. Einrichtung nach Anspruch 1 oder Anspruch 2, dadurch gekennzeichnet, dass die Konstantstromversorgung von dem stationären Gerät her zwei einbezogene Stabilisierungsschaltungen (120, 121) umfasst, deren Eingänge in Serie und deren Ausgänge parallel geschaltet sind.

4. Einrichtung nach einem der vorhergehenden Ansprüche, dadurch gekennzeichnet, dass sie sich in Form eines Rohres (1) darstellt, das an seinem vorderen Ende einen profilierten Detektionskopf (6, 30) aus hartem Material wie Spezialstahl, hinter dem Kopf einen zylindrischen Körper (7), der die eingebettete Elektronik umgibt, und ein oberes Ende (9, 10) zur Abdichtung und Verbindung mit dem Diagraphie-Kabel (11) für die Versorgung und Aufhängung aufweist.

5. Einrichtung nach Anspruch 4, dadurch gekennzeichnet, dass der Detektionskopf (6, 13; 30, 31) am Ende des Rohres in seiner Achse unter Anordnung von dichtenden und isolierenden Verbindungselementen (14, 15, 16; 34, 35, 36) relativ zu dem Körper gelagert ist und dass er an seinem hinteren Ende gegen ein keramisches, piézo-elektrisches Plättchen (21, 32) anliegt, das durch ein Kompressionselement in Form einer Feder gehalten wird und den vorgenannten Wandler bildet.

FIG_1

FIG_2

FIG_3

FIG_5

EP 0 148 690 B1

FIG_4

EP 0 148 690 B1